# EUROPEAN PATENT APPLICATION

(11) **EP 2 228 978 A1**
(43) Date of publication of application: **15.09.2010**
(21) Application number: 10154582.0
(22) Date of filing: 24.02.2010
(51) Int. Cl.: H04M 1/725

(54) **Data access system, terminal apparatus, and method for accessing data**

(30) Priority: 09.03.2009 JP 2009054506
(71) Applicant: Fujitsu Limited, Kawasaki-shi, Kanagawa 211-8588 (JP)
(72) Inventor: Ono, Shinichi, Kawasaki-shi Kanagawa 211-8588 (JP); Nakasa, Kanako, Kawasaki-shi Kanagawa 211-8588 (JP)
(74) Representative: Fenlon, Christine Lesley

(57) **Abstract**

The system comprises a portable information device, a terminal apparatus, and a server. A portable information device sends stored data to the server and transmits a network address of the server to the terminal apparatus. The terminal apparatus receives the network address from the portable information device, detects a position where a physical object is in contact with the display unit and causing the wireless section to receive the network address from the portable information device, and controls the display unit to display an icon at the detected position of the display unit when he position is detected by the detector, and accessing the received network address when selecting the displayed icon data is selected from exterior. And server sends the data received from the portable information device to the terminal apparatus when the server is accessed from the terminal apparatus.

## Description

### FIELD

The embodiment discussed herein is related to a data access system, a terminal apparatus, and a method for accessing data.

### BACKGROUND

When data created by an information device such as a mobile phone or a digital camera is stored in the internal storage of the information device, the data can be easily retrieved there from by using a simple operation. (Examples of such data include data of an address book of a mobile phone and data of an image captured by a digital camera.)

In some cases, however, such data may be transferred from the information device that has actually created the data to a personal computer (hereinafter abbreviated as PC) or a server, and thus no data may be left in the internal storage of the information device. In other cases, such data may be present as a component of a website or a blog, and thus it is often the case that data created by one information device may be present in different locations or may be lost.

Heretofore, as a technique for managing image data by using an electronic tag, the technique described in, for example, Japanese Laid-open Patent Publication No. 2006-148611 has been known.

A description of this technique will now be provided.

When a user specifies an image data item stored in a digital camera, the digital camera ejects a sticker with a wireless tag. In this case, the digital camera stores the specified image data item in this wireless tag.

With this feature, the user can attach, on a stub of a ticket obtained at a concert, or a souvenir such as a pamphlet of an event, the sticker described above in which data of an image that has been captured by the camera at the site thereof is stored. With this technique, the user can display digital photos associated with the souvenir on a viewer by reading the wireless tag attached to the souvenir with the viewer.

However, in the above-described technique, only image data stored in electronic tags is retrieved.

Therefore, with the technique of the related art, it is not known to which device or recording medium data has been transferred after the data was generated by an information device.

### SUMMARY

Accordingly, it is desirable to provide to which device or recording medium data has been transferred after the data was generated by an information device.

According to an aspect of the embodiment, a system includes a portable information device, a terminal apparatus, and a server. A portable information device sends stored data to the server and transmits a network address of the server to the terminal apparatus. The terminal apparatus receives the network address from the portable information device, detects a position where a physical object is in contact with the display unit and causing the wireless section to receive the network address from the portable information device, and controls the display unit to display an icon at the detected position of the display unit when he position is detected by the detector, and accessing the received network address when selecting the displayed icon data is selected from exterior. And server sends the data received from the portable information device to the terminal apparatus when the server is accessed from the terminal apparatus.

### BRIEF DESCRIPTION OF THE DRAWINGS

Preferred features of the present invention will now be described, purely by way of example, with reference to the accompanying drawings, in which:

FIG. 1 is a system configuration diagram illustrating a virtual access control system including an embodiment of a virtual access control device ;

FIG. 2 is a block diagram illustrating an example configuration of a server in FIG. 1;

FIG. 3 is a flowchart illustrating processing of reading an electronic tag with the virtual access control device of the embodiment;

FIG. 4 is a flowchart illustrating processing of browsing data with the virtual access control device of the embodiment;

FIG. 5 is a flowchart illustrating processing of the server in the embodiment; and

Figs. 6A to 6C are conceptual diagrams illustrating usage states of the virtual access control device.

### BRIEF DESCRIPTION OF THE EMBODIMENT

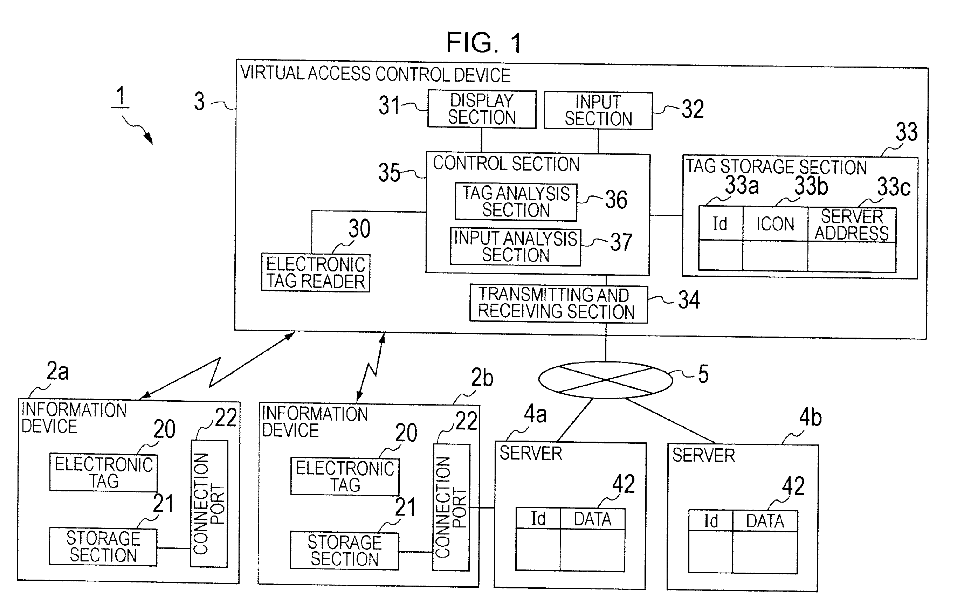

An embodiment will be described in detail with reference to the drawings. FIG. 1 is a system configuration diagram illustrating a virtual access control system including an embodiment of a virtual access control device. Note that, in this embodiment, an electronic tag reader is provided as communication means for reading tag information of information devices with the virtual access control device.

Referring to FIG. 1, a virtual access control system 1 includes information devices 2a and 2b (hereinafter 2a and 2b are collectively denoted as 2), a virtual access control device 3, servers 4a and 4b (hereinafter 4a and 4b are collectively denoted as 4), and a network 5 that allows a connection between the virtual access control device 3 and the servers 4.

At least one information device 2 is present within the virtual access control system 1, and the information device 2 is illustrated as two information devices 2a and 2b in FIG. 1. Similarly, at least one server 4 is present within the virtual access control system 1, and the server 4 is illustrated as two servers 4a and 4b in FIG. 1.

It is assumed that the information device 2 is mainly an information device that creates displayable information such as still images or moving images. More specifically, it is assumed that the information device 2 is a digital still camera or a digital camcorder but may be a mobile phone with a camera. Alternatively, the information device 2 may be an information device that creates text information or numerical information.

Each of the information devices 2a and 2b includes an electronic tag 20, a storage section 21 for storing data created by the information device 2, and a connection port 22 for providing a connection to the server 4. In FIG. 1, it is assumed that only the information device 2b is connected to the server 4a.

The electronic tag 20 is a radio frequency identification tag (RFID tag) which is attached to or embedded in the information device 2 and enables contactless communication. The electronic tag 20 is preferably of a passive type, which is provided with no built-in battery, rather than an active type, which is provided with a built-in battery. A passive-type electronic tag rectifies radio waves received from an electronic tag reader and then converts the radio waves into a direct current, and an integrated circuit (IC), which is a main component of the electronic tag, operates by using this direct current as a power source. The communication range is approximately a few centimeters.

A storage content of the electronic tag 20 includes identification information Id(i) of the information device 2 containing this electronic tag 20, icon image information Icon(i) indicating the appearance of the information device 2, and server address information Ser(i, m) for accessing data of the information device 2. Note that, in the following description, (i) is a subscript for distinguishing individual information devices 2, and m in (i, m) is a subscript for distinguishing from one another a plurality of servers 4 that can transmit data of an information device (i) via the network 5.

The identification information Id(i) may be, for example, information that a manufacturer has created, which includes the name of the manufacturer of the information device 2 (or the identification code of the manufacturer), and the model number and the product serial number of the information device 2. However, the identification information Id(i) may contain at least information that allows the virtual access control device 3 to identify the information device 2 that has created data to be used.

The preferred icon image information Icon(i) is one that indicates an icon image representing the appearance features of the actual information device 2 so that the information device 2 can be intuitively recognized from the icon image. In a case where a plurality of information devices 2 having the same appearance features but different identification information Id(i) are included in the system, the plurality of information devices 2 may be distinguished from one another by changing the color of the icon images, or by superimposing numbers (1, 2, 3, ...), any character or character string for distinguishing the plurality of information devices 2 having the same appearance as an additional identification code on the icon images.

The server address information Ser(i, m) indicates the address of the server 4 to which the information device 2 is connected as a peripheral device or the address of the server 4 in which data transferred from the information device 2 is stored. This configuration of address information depends on the network 5, that is, as described later, it depends on whether the network 5, which connects the virtual access control device 3 and the server 4, is a local area network or the Internet.

The virtual access control device 3 includes an electronic tag reader 30, a display section 31, an input section 32, a tag storage section 33, a transmitting and receiving section 34, and a control section 35. Note that the preferred virtual access control device 3 includes a built-in battery (not shown) and is configured to have a portable size.

The electronic tag reader 30 is a device that reads a storage content of the electronic tag 20 from the information device 2, and meets the standards of the frequency and protocol of the electronic tag 20 to be read.

The display section 31 is a display device that displays icon images and data of the information devices 2. For the display section 31, a liquid crystal display device or an organic electroluminescence (EL) display device may be used. However, in a case where the same image is being displayed continuously, it is preferred that electronic paper, which does not consume electricity, is used for the display section 31, whereby icon images or the image that was selected last time can be continuously displayed even when the power of the virtual access control device 3 is in an off state.

The input section 32 is a device to which a selection of an icon image displayed on the display section 31 is input to select an information device 2, and to which an operation instruction such as a selection of which data item to be displayed among the data items of the information device 2 is input. Considering the portability and the operability of the virtual access control device 3, the preferred input section 32 is a touch panel disposed on the display section 31. In addition, using a touch panel for the input section 32 enables detection of the position of the information device 2 placed on the virtual access control device 3, thereby enabling performance of control for displaying the icon image of the information device 2 at that position.

The tag storage section 33 stores information that the electronic tag reader 30 has read from the electronic tag 20. The tag storage section 33 uses, for example, a table format in order to store the identification information Id(i), the icon image information Icon(i), and server address information Ser(i, m) of an information device 2 while associating them with one another. The tag storage section 33 includes, for each subscript number (i) of information device 2, an identification information storage section 33a for storing the identification information Id(i), an icon image storage section 33b for storing the icon image information Icon(i), and a server address storage section 33c for storing the server address information Ser(i, m). Here, regarding the server address information Ser(i, m), a plurality of server address information items Ser(i, m) having different m values can be stored for one identification information item Id(i).

In addition, the tag storage section 33 is formed of a non-volatile memory, such as a flash memory or the like, in which the storage content thereof remains intact even when the virtual access control device 3 is turned off.

The transmitting and receiving section 34 is a transmitting and receiving section for performing communication to the server 4 via the network 5, and may use a wired connection. However, a wireless connection using such as a wireless LAN is preferable in order to enhance the portability of the virtual access control device 3.

The control section 35 performs overall control of the virtual access control device 3, and includes a tag analysis section 36 that analyzes electronic tag information read by the electronic tag reader 30 and an input analysis section 37 that analyzes inputs provided from the input section 32.

The tag analysis section 36 separates identification information Id(i), icon image information Icon(i) and server address information Ser (i, m) from Tag(i) that is a storage content of the electronic tag 20 that the electronic tag reader 30 has read, and stores them in the tag storage section 33 while associating them with one another.

The input analysis section 37 calculates the coordinates of a position on the display section 31 at which an input operation has been performed using the input section 32, and determines to which icon image information item Icon(i) the input has been made.

In the present embodiment, the control section 35 has a storage section in which a tag analysis program and an input/output analysis program are stored, and includes a CPU, a RAM, and various input/output ports. The CPU executes the programs stored in the storage section. In response to execution of the programs, the CPU performs input/output processes to/from the electronic tag reader 30, the display section 31, the input section 32, the tag storage section 33, and the transmitting and receiving section 34 via the various input/output ports.

With these processes, the control section 35 functions as the tag analysis section 36 and the input analysis section 37.

Note that, the tag storage section 33 and the storage section that stores the above-described programs may be the same storage.

Furthermore, the above-described programs may be stored in a recording medium such as a CD-ROM or a DVD-ROM, or may be transferred to and stored in the storage section provided in the control section.

In addition, each of the tag analysis section 36 and the input analysis section 37 may be formed of hardware that performs a process which is similar to that performed by a corresponding one of the tag analysis section 36 and the input analysis section 37.

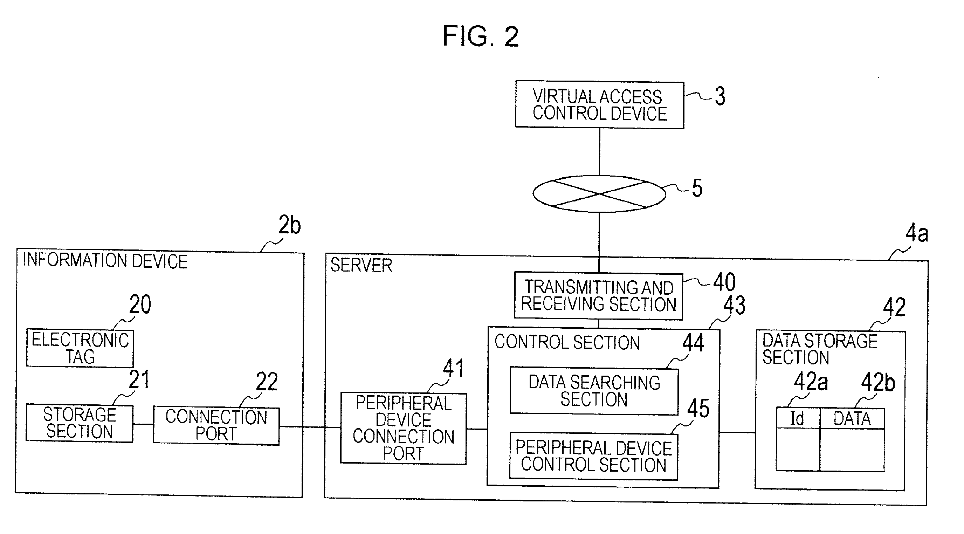

FIG. 2 is a block diagram illustrating an example configuration of the server 4. As illustrated in FIG. 2, the server 4 includes a transmitting and receiving section 40 for providing a connection to the network 5, a peripheral device connection port 41 for connecting to the information device 2, a data storage section 42, and a control section 43.

The control section 43 includes a data searching section 44 for searching data stored in the data storage section 42, and a peripheral device control section 45 for controlling a peripheral device connected to the peripheral device connection port 41.

The peripheral device connection port 41 is a connection port that supports the connection port 22 that the information device 2b includes. For example, in a case where the information device 2 is a digital still camera, the peripheral device connection port 41 is a standard universal serial bus (USB) port or, for some models, an Institute of Electrical and Electronics Engineers (IEEE) 1394 port. Both ports may be included as the peripheral device connection port 41. When the server 4a receives a request for data of the information device 2b having the identification information Id(i), data Data(i, k) stored in the storage section 21 of the information device 2b is read there from and transmitted to the virtual access control device 3 if the information device 2b is connected to the server 4a.

The data storage section 42 is a storage section that stores data which has been transferred from the information device 2. For each identification information Id(i) of information device 2, the data storage section 42 stores data Data(i, j) acquired from the information device 2. Therefore, the data storage section 42 includes an identification information section 42a that stores identification information Id(i) and a data body section 42b that stores data Data(i, j).

When the server 4 receives a request for data of the information device 2 having the identification information Id(i), the data Data(i, j), if stored in the data storage section 42, is read there from and transmitted to the virtual access control device 3.

If the information device 2 is a digital still camera, it is preferred that the format in which image data is stored in the data storage section 42 is the Exchangeable image file format (Exif) from the viewpoint of data compatibility.

The data structure of an Exif file includes a header, a thumbnail image having a fixed number of pixels, and a main image having any number of pixels. The header includes items such as the number of pixels of the main image, compression mode, date and time when the image was captured, manufacturer name, camera model, aperture, shutter speed, ISO speed, color space, and data size (in bytes). The thumbnail image is an image produced by compressing the main image into a fixed number of pixels (160 × 120 pixels), and can be used in searching for images together with header items.

Note that, in the present embodiment, the control section 43 has a storage section in which a data searching program and a peripheral device control program are stored, and includes a CPU, a RAM, and various input/output ports. The CPU executes the programs stored in the storage section. In response to execution of the programs, the CPU performs input/output processes to/from the transmitting and receiving section 40, the peripheral device connection port 41, and the data storage section 42 via the various input/output ports.

With these processes, the control section 43 functions as the data searching section 44 and the peripheral device control section 45.

Note that, the data storage section 42 and the storage section that stores the above-described programs may be the same storage.

Furthermore, the above-described programs may be stored in a recording medium such as a CD-ROM or a DVD-ROM, or may be transferred to and stored in the storage section provided in the control section.

In addition, each of the data searching section 44 and the peripheral device control section 45 may be formed of hardware that has a function which is similar to that of a corresponding one of the data searching section 44 and the peripheral device control section 45.

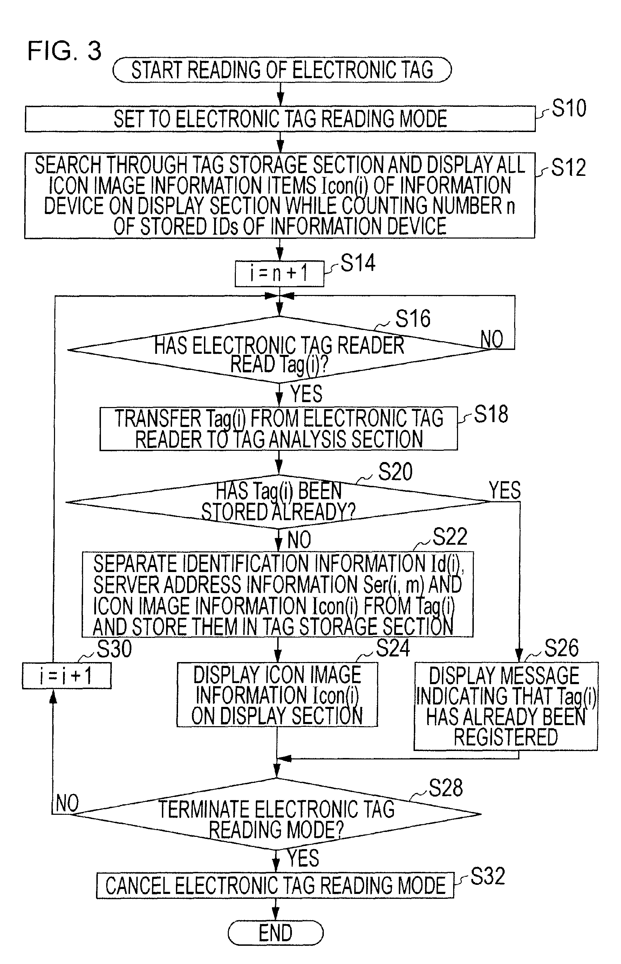

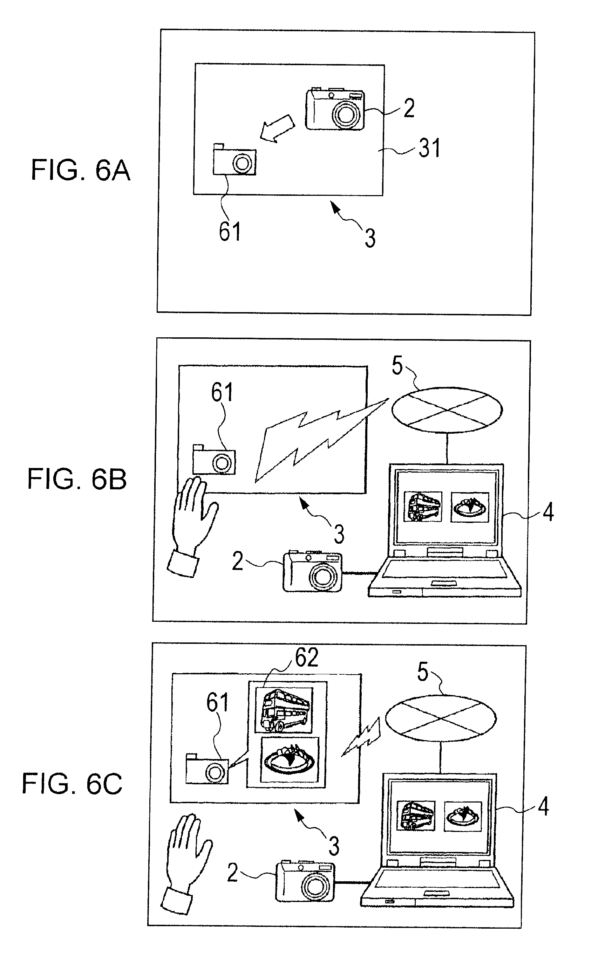

Next, operations of the present embodiment will be described with reference to the flowcharts in Figs. 3 to 5 and the conceptual diagrams in Figs. 6A to 6C. FIG. 3 is the flowchart illustrating processing of reading the electronic tag 20 with the virtual access control device 3. First, in step 10 (hereinafter step is abbreviated as S), a user operates the input section 32, or a switch (not shown) or the like, of the virtual access control device 3 to set the virtual access control device 3 to be in an electronic tag reading mode. In response to this, power is supplied to the electronic tag reader 30, whereby the electronic tag reader 30 enters a state in which the electronic tag reader 30 can read the electronic tag 20. Keeping the electronic tag reader 30 in the state where the electronic tag reader 30 can read the electronic tag 20 all the time is not recommended from the viewpoints of power consumption of the built-in battery included in the virtual access control device 3 and radio wave interference with other electronic tag readers that use the same frequency band.

Next, in S12, the control section 35 of the virtual access control device 3 searches through the tag storage section 33 and displays all icon image information items Icon(i) of information device 2 on the display section 31 while counting the number n of identification information items Id(i) of information device 2 which have been already stored in the tag storage section 33.

Next, in S14, the control section 35 sets anew the value of a control variable i to (n+1). That is, this is because the electronic tag 20 to be read next will be that of the (n+1)th information device 2.

Next, in S16, the control section 35 waits for the electronic tag reader 30 until the electronic tag reader 30 reads the Tag(i), which is the storage content of the electronic tag 20, from the information device 2. While the control section 35 waits for the electronic tag reader 30 until the electronic tag reader 30 reads the Tag(i) in S16, when, for example, the information device 2 is placed on the virtual access control device 3, whereby the electronic tag reader 30 reads Tag(i), which is the content of the electronic tag 20 attached to the information device 2, the flow proceeds to S18. In S16, in a case where the input section 32 of the virtual access control device 3 is a touch panel, storing the position at which the information device 2 was placed and then, in S24, displaying the icon at the position at which this information device 2 was placed make the arrangement of the icon more natural and easier to find.

In S18, the control section 35 transfers the Tag(i) from the electronic tag reader 30 to the tag analysis section 36. Then, in S20, the tag analysis section 36 determines whether or not the Tag(i) has already been stored in the tag storage section 33. If the Tag(i) has been stored, the flow proceeds to S26 to display a message on the display section 31 indicating that the Tag(i) has already been registered, and then the flow proceeds to S28.

If it is determined, in the determination in S20, that the Tag(i) has not been stored, the flow proceeds to S22. In S22, the tag analysis section 36 separates identification information Id(i), icon image information Icon(i) and server address information Ser(i, m) from the Tag(i) and stores them in the tag storage section 33 while associating them with one another. Then, in S24, the control section 35 reads the icon image information Icon(i) from the tag storage section 33 and displays it as the icon image on the display section 31, and then the flow proceeds to S28. At this time, in a case where the input section 32 is formed of a touch panel, displaying the icon image at the position stored in S16 results in the icon being displayed at the position at which the information device 2 was actually placed, whereby the icon image can be displayed at a desired position. This state is illustrated in FIG. 6A. An icon image 61 may be displayed continuously even when the information device 2 is removed from the virtual access control device 3.

In S28, the control section 35 determines whether or not an instruction to terminate the electronic tag reading mode has been input. If an instruction to terminate the electronic tag reading mode has not been input, the control section 35 increments the control variable i by one in S30 and returns to S16 to read the next electronic tag 20.

If it is determined that an instruction to terminate the electronic tag reading mode has been input, the control section 35 cancels the electronic tag reading mode in S32, turns the power of the electronic tag reader 30 off, and terminates the electronic tag reading.

When the virtual access control device 3 executes the above processes of the flowchart, tag information can be acquired by initial reading and additional reading of the electronic tag 20 and the icon can be displayed on the display section 31.

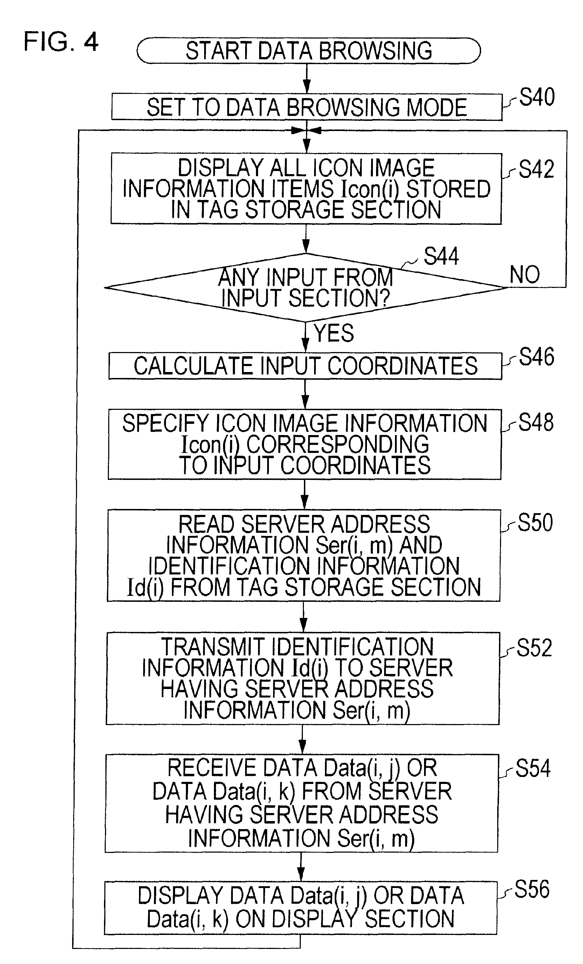

FIG. 4 is a flowchart illustrating processing of browsing data after the virtual access control device 3 reads the electronic tag 20. First, in S40, the virtual access control device 3 is set to be in a data browsing mode. The data browsing mode is a basic mode of the virtual access control device 3, and it is preferred that the virtual access control device 3 is automatically set to be in the data browsing mode whenever the power of the virtual access control device 3 is turned on, allowing the user to skip this operation.

Next, in S42, the control section 35 reads all the icon image information items Icon(i) (i=1 to n) stored in the tag storage section 33 and displays each of the icon image information items Icon(i) on the display section 31. Next, in S44, the control section 35 determines whether or not an operation instruction has been input from the input section 32. If an operation instruction has not been input, the flow returns to S42. If an operation instruction has been input, the control section 35 proceeds to S46 to calculate input coordinates in order to determine the coordinates of a position on the display section 31 at which the input operation was performed using the input section 32.

Next, in S48, the control section 35 specifies icon image information Icon(i) corresponding to the input coordinates. Next, in S50, the control section 35 reads the server address information Ser(i, m) and the identification information Id(i) corresponding to the icon image information Icon(i) from the tag storage section 33.

Next, in S52, the control section 35 transmits the identification information Id(i) to the server 4 having the server address information Ser(i, m) via the transmitting and receiving section 34 and the network 5. A state in which processes starting with input operation in S44 ending with transmission in S52 are performed is conceptually illustrated in FIG. 6B.

Next, in S54, the control section 35 receives one or both of data Data(i, j) and data Data(i, k) which are data created by the information device 2 having the identification information Id(i) from the server 4 having the server address information Ser(i, m) via the network 5 and the transmitting and receiving section 34.

The data Data(i, j) is data that has been transferred from the information device 2 to the data storage section 42 of the server 4 and has been stored therein, and the data Data(i, k) is data that has been read by the server 4 from the storage section 21 included in the information device 2. Hereinafter the data Data(i, j) and the data Data(i, k) are collectively referred to as data Data(i).

Next, in S56, the control section 35 displays one or both of the data Data(i, j) and the data Data(i, k) as an image or images 62 on the display section 31, and then returns to S42. A state in which images 62 are displayed on the display section 31 in S56 is conceptually illustrated in FIG. 6C.

Note that, in S52 and S54, in a case where there is a plurality of values m, that is, in a case where there is a plurality of servers 4 that provide data of the information device 2 having the identification information Id(i), it is assumed that transmission of the identification information Id(i) and reception of the data Data(i) are performed repeatedly to/from the respective addresses. That is, even if data of the information device 2 having the identification information Id(i) is distributed to a plurality of servers 4, the data can be collected from all the servers 4.

When the virtual access control device 3 executes the above processes of the flowchart, data created by the information device 2 corresponding to the icon specified from the input section 32 can be acquired via the network 5 and can be displayed on the display section 31.

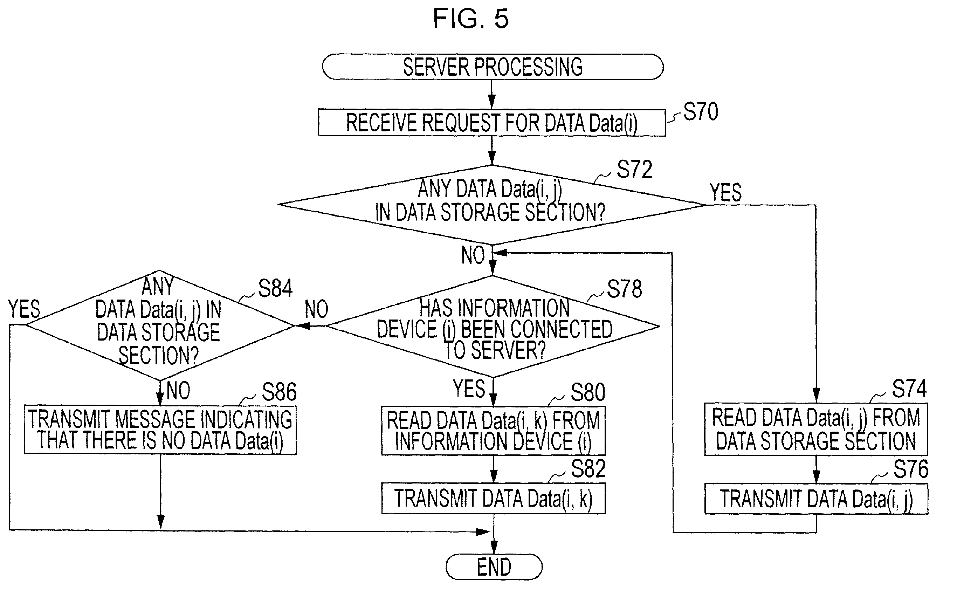

FIG. 5 is a flowchart illustrating processing of the server 4. In S70, the control section 43 of the server 4 receives a request for data Data(i) from the virtual access control device 3 via the network 5 and the transmitting and receiving section 40. Next, in S72, the data searching section 44 of the control section 43 searches through the identification information section 42a of the data storage section 42 and determines whether or not the data Data(i, j) having the identification information Id(i) is stored in the data storage section 42. If the data Data(i, j) is stored, the flow proceeds to S74, and the data searching section 44 of the control section 43 reads the data Data(i, j) from the data body section 42b of the data storage section 42. Next, in S76, the control section 43 transmits the data Data(i, j) to the virtual access control device 3 via the transmitting and receiving section 40 and the network 5.

Next, in S78, the peripheral device control section 45 of the control section 43 determines whether or not the information device 2 having the identification information Id(i) is connected to the server 4. If the information device 2 is connected to the server 4, the flow proceeds to S80, and the peripheral device control section 45 reads the data Data(i, k) from the storage section 21 of the information device 2 via the peripheral device connection port 41. Next, in S82, the control section 43 transmits the data Data(i, k) to the virtual access control device 3 via the transmitting and receiving section 40 and the network 5, and terminates the processing.

If it is determined, in the determination in S78, that the information device 2 having the identification information Id(i) is not connected to the server 4, the flow proceeds to S84. In S84, the data searching section 44 of the control section 43 searches through the identification information section 42a of the data storage section 42 and determines whether or not the data Data(i, j) having the identification information Id(i) is stored in the data storage section 42. If the data Data(i, j) is stored, the server 4 terminates the processing. If the data Data(i, j) is not stored, the flow proceeds to S86, and the control section 43 transmits a message indicating that there is no transmittable data Data(i) from the server 4 to the virtual access control device 3 via the transmitting and receiving section 40 and the network 5 and terminates the processing.

With the above processes, the server 4, which has received the request for the data Data(i) from the virtual access control device 3, can transmit the data Data(i) to the virtual access control device 3.

Note that, in a case where the data Data(i) is image data of the Exif format, the transmission of the data from the server 4 to the virtual access control device 3 may be performed in two stages. That is, the server 4 first transmits the headers and the thumbnail images to the virtual access control device 3 to display the thumbnail images on the display section 31. The user of the virtual access control device 3 searches for a desired image by using date and time in the headers, image titles or the like, and thumbnail images. Next, when a specific thumbnail image displayed on the display section 31 is selected, the virtual access control device 3 makes a request for image data corresponding to the thumbnail image to the server 4. This two-stage transmission can prevent unnecessary traffic, thereby shortening the time required to display thumbnail images after the icon indicating the information device 2 is specified, and thus the two-stage transmission is effective especially in a case where there are many images.

In a case where the information device 2 is a mobile phone, the processing to be performed for images captured by the camera thereof is the same as that for images captured by a digital still camera. In addition, address book data of the mobile phone or mails saved therein can be browsed from the virtual access control device 3 by using similar processing except that text data is used instead of image data.

Furthermore, in a case where the mobile phone is connected to the server 4 and controlling of the mobile phone from the server 4 is allowed, the mobile phone can be remotely controlled from the virtual access control device 3. In this case, when the icon of the mobile phone is specified, the display section 31 of the virtual access control device 3 is caused to display icons indicating operation keys of the mobile phone. When the user operates icons of the operation keys from the input section 32, the mobile phone is operated via the server 4 and the result is displayed on the display section 31. With this configuration, it is made possible that a newly arriving mail can be acquired from the mobile phone and displayed on the display section 31.

According to the above-described embodiment, an advantage is obtained in that, even if the information device that created data is not accessible or the data is not left in the information device, and even if the user do not know the address of a server to which the data was transferred from the information device, the user can use the data by acquiring the data from the virtual access control device.

Furthermore, according to the embodiment, another advantage is obtained in that data can be acquired as required without accumulating data created by the information device in the virtual access control device, whereby the user can access a large quantity of data created by multiple information devices without having a limitation in the capacity for data accumulation.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A terminal apparatus capable to communicate with a portable information device and a server, the portable information device transferring a stored data to the server, the terminal apparatus comprising:
a display unit for displaying information;
a wireless receiver for receiving the network address of the server from the portable information device by wireless communication,
a detector for detecting a position where a physical object is in contact with the display unit and causing the wireless receiver to receive the network address from the portable information device; and
a controller for controlling the display unit to display an icon at the detected position of the display unit when the position is detected by the detector, and accessing the received network address when selecting the displayed icon data is selected from exterior.

2. The terminal apparatus according to claim 1, wherein;
the controller displays the icon received from the portable information device when the position is detected by the detector.

3. A data access system comprising a terminal apparatus as claimed in claim 1 or 2, the portable information device and the server also forming part of the data access system;
the portable information device including;
a first memory for storing data,
a wireless transmitter for transmitting a network address of the server to the terminal apparatus by wireless communication, and
a first communicator for sending the data stored into the first memory to the server;
the server sending the data received from the portable information device to the terminal apparatus when the server is accessed from the terminal apparatus.

4. The data access system according to claim 3, wherein;
the wireless communicator transmits the icon data to the terminal by wireless communication upon transmitting a network address of the server, and
the controller displays the icon received from the portable information device when the position is detected by the detector.

5. The data access system according to claim 3 or 4,
the server including;
a second communicator for receiving the data from the portable information device,
a second memory for storing the receiving the data by the a second communicator;
wherein the server sends the data stored into to the second memory terminal apparatus when the server is accessed from the terminal apparatus.

6. The data access system according to any of claims 3 to 5, wherein;
a first communicator sends the data to the server via a network;
the server sends the data received from the portable information device which is received via the network when the server is accessed from the terminal apparatus.

7. A method for accessing data by a data access system including a portable information device, a terminal apparatus, and a server, the portable information device including a first memory for storing data, the terminal including a display unit for displaying information, the method comprising:
sending the data stored into the first memory to the server, by the portable information device;
transmitting a network address of the server to the terminal apparatus by wireless communication, by the portable information device;
receiving the network address from the portable information device by wireless communication, by the terminal apparatus;
detecting a position where a physical object is in contact with the display unit and causing the wireless section to receive the network address from the portable information device, by the terminal apparatus;
controlling the display unit to display an icon at the detected position of the display unit when he position is detected by the detector, and accessing the received network address when selecting the displayed icon data is selected from exterior, by the terminal apparatus; and
sending the data received from the portable information device to the terminal apparatus when the server is accessed from the terminal apparatus, by the portable information device.

8. A computer program which, when executed by a computing apparatus, causes the computing apparatus to become the terminal apparatus according to claim 1.

9. A data access system comprising a portable information device, a terminal apparatus, and a server;
the portable information device including;
a first memory for storing data,
a wireless transmitter for transmitting a network address of the server to the terminal apparatus by wireless communication, and
a first communicator for sending the data stored into the first memory to the server;
the terminal apparatus including;
a display unit for displaying information,
a wireless receiver for receiving the network address from the portable information device by wireless communication,
a detector for detecting a position where a physical object is in contact with the display unit and causing the wireless receiver to receive the network address from the portable information device,
a controller for controlling the display unit to display an icon at the detected position of the display unit when the position is detected by the detector, and accessing the received network address when selecting the displayed icon data is selected from exterior;
the server sending the data received from the portable information device to the terminal apparatus when the server is accessed from the terminal apparatus.

10. The data access system according to claim 9, wherein;
the wireless communicator transmits the icon data to the terminal by wireless communication upon transmitting a network address of the server, and
the controller displays the icon received from the portable information device when the position is detected by the detector.

11. The data access system according to claim 9,
the server including;
a second communicator for receiving the data from the portable information device,
a second memory for storing the receiving the data by the a second communicator;
wherein the server sends the data stored into to the second memory terminal apparatus when the server is accessed from the terminal apparatus.

12. The data access system according to claim 9, wherein;
a first communicator sends the data to the server via a network;
the server sends the data received from the portable information device which is received via the network when the server is accessed from the terminal apparatus.
